(19) Europäisches Patentamt / European Patent Office / Office européen des brevets

(11) **EP 1 502 082 B1**

(12) **EUROPEAN PATENT SPECIFICATION**

(45) Date of publication and mention
of the grant of the patent:
**24.02.2016 Bulletin 2016/08**

(21) Application number: **03721246.1**

(22) Date of filing: **28.04.2003**

(51) Int Cl.:
*G01D 5/20* *(2006.01)*      *G01D 3/08* *(2006.01)*
*G01D 5/244* *(2006.01)*

(86) International application number:
**PCT/SE2003/000675**

(87) International publication number:
**WO 2003/095946 (20.11.2003 Gazette 2003/47)**

(54) **METHOD AND DEVICE FOR DIAGNOSIS OF DETECTOR**

VERFAHREN UND EINRICHTUNG ZUR DIAGNOSE EINES DETEKTORS

PROCEDE ET DISPOSITIF POUR LE DIAGNOSTIC DE DETECTEURS

(84) Designated Contracting States:
**AT BE BG CH CY CZ DE DK EE ES FI FR GB GR
HU IE IT LI LU MC NL PT RO SE SI SK TR**

(30) Priority: **07.05.2002 SE 0201411**

(43) Date of publication of application:
**02.02.2005 Bulletin 2005/05**

(73) Proprietor: **VOLVO LASTVAGNAR AB
405 08 Göteborg (SE)**

(72) Inventors:
• **MAX, Erland
  S-426 68 Västra Frölunda (SE)**
• **STEEN, Marcus
  S-424 33 Angered (SE)**

(74) Representative: **Andersson, Per Rune
  Zacco Sweden AB
  P.O. Box 5581
  114 85 Stockholm (SE)**

(56) References cited:
WO-A1-00/71977      DE-A1- 4 013 393
DE-A1- 4 122 635      DE-C1- 19 830 981
GB-A- 2 068 124      US-B1- 6 313 741

## Description

TECHNICAL FIELD:

The present invention relates to a method for diagnosis of a detector, in accordance with the preamble of the accompanying claim 1. In particular, the invention will find its application in connection with automotive vehicles, and is intended to be a method for diagnosis of the function of detectors for detection of, for example, the position of a moving element in a drive line, e.g. a clutch or a gearbox control.

The invention also relates to a device intended for such diagnosis, in accordance with the preamble of the accompanying claim 12.

BACKGROUND ART:

In many technical contexts, there exists a requirement for position sensors, for detecting and measuring the positions of various components. In connection with vehicles, for example heavy-duty trucks, position sensors are utilised in connection with the vehicle clutch and gearbox, for detection of the positions of moving components. For the vehicle clutch, the measured position value may be used for automatic control of the clutch, and for the gearbox, the measured position value may be used for confirmation of the engagement of a certain gear ratio.

A known type of gearbox comprises a so-called splitter ratio means, a main gearbox section and a range ratio means. The splitter ratio means is located closest to the clutch and functions as a full/half step ratio means. The main gearbox section is located in the middle and functions like a conventional gearbox for e.g. a passenger car. The range ratio means, finally, is located at the rear and functions like a range gearbox. Consequently, there is a requirement for being able to detect the position of the clutch, and of the splitter and the range ratio means, respectively, in an appropriate and efficient manner. In a drive line, the power take-off (PTO), differential brakes and other components might also need an accurate position sensor.

A previously known method for position detection is the use of an inductive type position sensor of the type which is specified in the Swedish patent application No. 9901876-4 (corresponds to international patent application No. PCT/SE00/00983) and which is based on a sensor, generally comprising a coil and a magnetic core, movable inside the coil. The movable core is mechanically influenced by the component, the position of which is to be detected, causing the coil inductance to vary depending on the position of the core inside the coil.

In connection with the known inductive sensor, a voltage pulse will be applied across the sensor coil, causing the current through the coil to increase with time. The inductance, and thereby also the time constant of the inductance (i.e. L/R) for the current increase, will vary depending on the position to be measured, which in turn will depend on how far into the coil the core has been inserted. The time it takes for the current to increase up to a predetermined value is measured and subsequently transformed into a corresponding core position.

One problem in connection with detectors of the above-mentioned type refers to a general requirement for diagnosis of such measuring equipment, which is not least important in vehicle applications, where detectors for recording measurement values regarding various operating conditions of the vehicle to a large extent are utilised.

DISCLOSURE OF THE INVENTION:

Thus, a primary object of the present invention is to solve the above problems and to provide an improved method for diagnosis of a sensor, in particular a sensor for detection of the position of moving components in an automotive vehicle drive line. This is achieved by a method as discussed in the introduction, the characteristics of which are defined by claim 1, wherein the method according to the invention relates to a method for diagnosis of a detector intended for detecting the position of a moving element, wherein the detector is of the inductive type and comprises a coil and a core movable within the coil, the position of said core in relation to the coil being dependent on the position of said element, wherein the method comprises: connecting a regularly alternating electrical voltage to said coil, measuring the current flowing through the coil. The method is characterised in that it comprises measuring a certain period of time passing during magnetisation of said core with said voltage; comparison between values based on said measured period of time in relation to a predetermined limit value, and determining whether any errors are evident in said sensor through said comparison.

The object is also achieved by a device as discussed in the introduction, the characteristics of which are defined by claim 11, wherein the device is intended for diagnosis of a detector intended for detecting the position of a moving element, wherein the detector is of the inductive type and comprises a coil and a core movable within the coil, the position of said core in relation to the coil being dependent on the position of said element, wherein the device comprises an amplifier means for connecting a regularly alternating electrical voltage to said coil, a measuring device for measuring the current flowing through the coil. The device according to the invention is characterised in that the measuring device is intended for measuring a certain period of time passing during magnetisation of said core with said voltage; and that said measuring device is intended for comparison between values based on said measured period of time in relation to an expected limit value, and for determining whether any errors are evident in said sensor through said comparison.

With the invention, a method and a device for diagnosis with high accuracy will be achieved in environments where temperatures vary strongly with time and space. Furthermore, the invention can be embodied by utilising existing sensors.

According to the invention, a relatively high frequency of said square wave voltage can be selected, allowing a large number of measurements to be performed and a mean value of said measurements to be calculated. This secures that temporary variations, e.g. due to vibrations of the position sensor, will not influence the measurements forming the basis of the diagnosis according to the invention.

The diagnosis according to the invention can be implemented in those cases where the sensors are utilised for, for example, position detection or for measurement of the ambient temperature.

Advantageous embodiments are described in the subsequent, dependent claims.

BRIEF DESCRIPTION OF THE DRAWINGS:

The invention will be explained below in connection with preferred embodiments and the enclosed drawings, in which:

Fig. 1 illustrates, schematically and in partial cross-section, a position sensor and a control device that can be utilised according to the invention,

Fig. 2 shows a voltage and current diagram, illustrating the function of the position sensor,

Fig. 3 shows two current curves, corresponding to two different temperatures,

Fig. 4 shows two current curves, illustrating how a temperature compensation during measurements with the position sensor can be performed, and

Fig. 5 shows how the existing position sensor can be utilised during measurement of the ambient temperature.

PREFERRED EMBODIMENT:

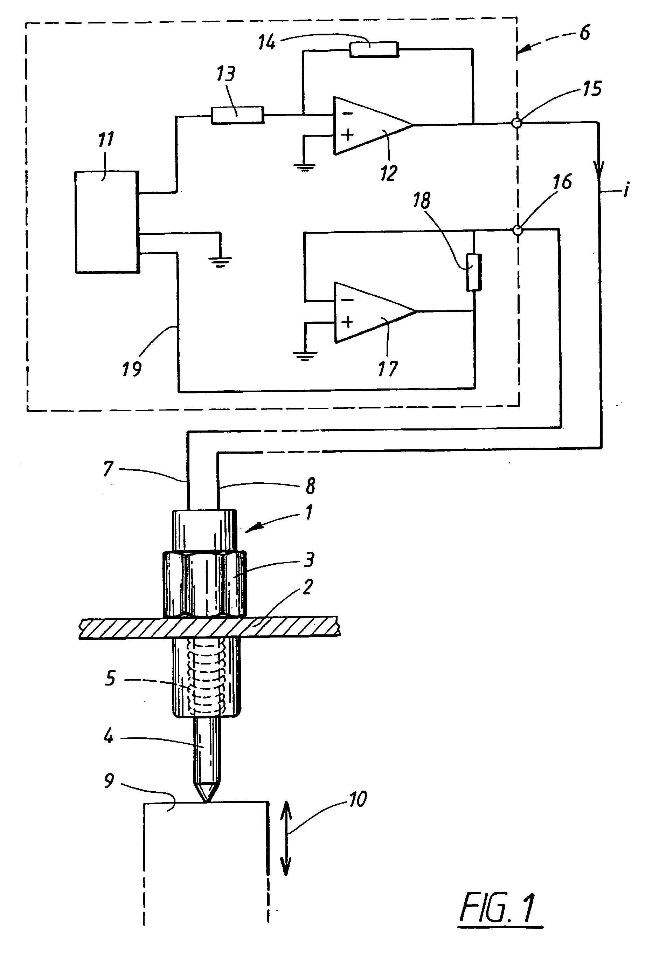

Fig. 1 shows a position sensor 1 of a type, the function of which can be controlled by means of a method and a device for diagnosis in accordance with the present invention. According to a preferred embodiment, the position sensor 1 is intended for use in connection with heavy-duty trucks, more particularly for position detection in a clutch or a gearbox of the vehicle. Consequently, the lower portion of the figure shows a side view, in partial cross-section, of a position sensor 1, arranged in a cover or casing 2, for example in such a clutch or gearbox. The position sensor 1 is arranged for attachment in a hole through the casing 2 by means of a screw 3. In this way, the position sensor 1 extends through said casing 2.

The position sensor 1, the function and construction of which is described in the Swedish patent application No. 9901876-4 (corresponds to international patent application No. PCT/SE00/00983), comprises a movable element in the form of a core 4, being arranged inside the casing 2 and movable within a coil 5 (indicated with dashed lines). The coil 5 is further connected to a separate measuring device 6, via two electrical connections 7, 8. The measuring device 6 and its function will be described in detail below. The position sensor 1 can be utilised with a system according to the circuit diagram illustrated in Fig. 1, but it is not limited to this but may be realised in other ways.

The position sensor 1 is of the inductive type, a type of sensor as such known. Further, the position sensor 1 is installed in the casing 2 in such a way that the core 4 can be mechanically influenced by an element 9, movable back and forth along the longitudinal direction of the core 4, as indicated by an arrow 10. In the applications suitable for the position sensor 1, the element 9 may in reality consist of, for example, a shaft, a piston rod or a sleeve. The position sensor 1 is however not limited to these examples, but may be applied also with other components. Preferably, the element 9 is arranged so as to allow displacement back and forth for a certain distance, which may for example lie within a range between a few millimetres and up to a few hundred millimetres. According to what was discussed initially, the inductance of the coil 5 will vary according to how far into the coil 5 the core is displaced. The position of the core 4 is in turn dependent of the position of the element 9 along the longitudinal direction of the core 4. In the following will be described how a measure of the inductance, and thereby of the position of the element 9, can be determined.

The position sensor 1 is, as was mentioned above, connected to a measuring device 6. Said device includes a computer unit 11 arranged for control and measurement in connection with position detection. To this end, the computer unit 11 is functioning to drive a first operational amplifier 12, via a resistor 13 connected to the negative input of the operational amplifier 12, causing a square wave voltage to appear at the output of the operational amplifier 12. The output of the operational amplifier 12 is hereby fed back to its negative input via a further resistor 14. The square wave voltage is output at a connection 15 and fed through the coil 5. Preferably, the square wave voltage has a frequency lying in the range between 2 Hz and 2 kHz.

According to what was explained above, the voltage across the coil 5 will cause a current i that will vary with time. The current i can be measured, by the coil 5 also being connected to a second connection 16 of the measuring device 6. This connection 16 is connected to a second operational amplifier 17, which, according to the embodiment, is connected as a current-voltage converter, with a resistor 18 between the output of the operational amplifier 17 and its negative input. The output of the operational amplifier 17 is further connected to an input of the computer unit 11, via an electrical connection 19. The measurement current $i$ is fed to the connection 16, and according to previously known relationships, the potential at the output of the second operational amplifier 17 will be substantially equal to the reverse sign of the current $i$, multiplied by the resistance of the resistor 18. This voltage can be detected in the computer unit 11, through which a value of the current $i$ can be determined.

One possible field of application area is to use the above-mentioned position sensor 1 in connection with gearboxes for heavy-duty trucks, more precisely during detection of the position of the gear ratios forming part of the gearbox. For example, four position sensors of the above-mentioned type may in this case be utilised in such a gearbox, although the number of course may vary.

An important principle of the function of the position sensor 1 is that the period of time $t_1$, needed for the current to rise from a first level $i_1$ to a second level $i_2$, is measured. This measured time period $t_1$ will provide a measure of the position of the core 4, because the inductance of the coil 5 (and thereby the time constant L/R for the change in the current $i$) will vary in dependence of how far into the coil 5 the core 4 has been inserted.

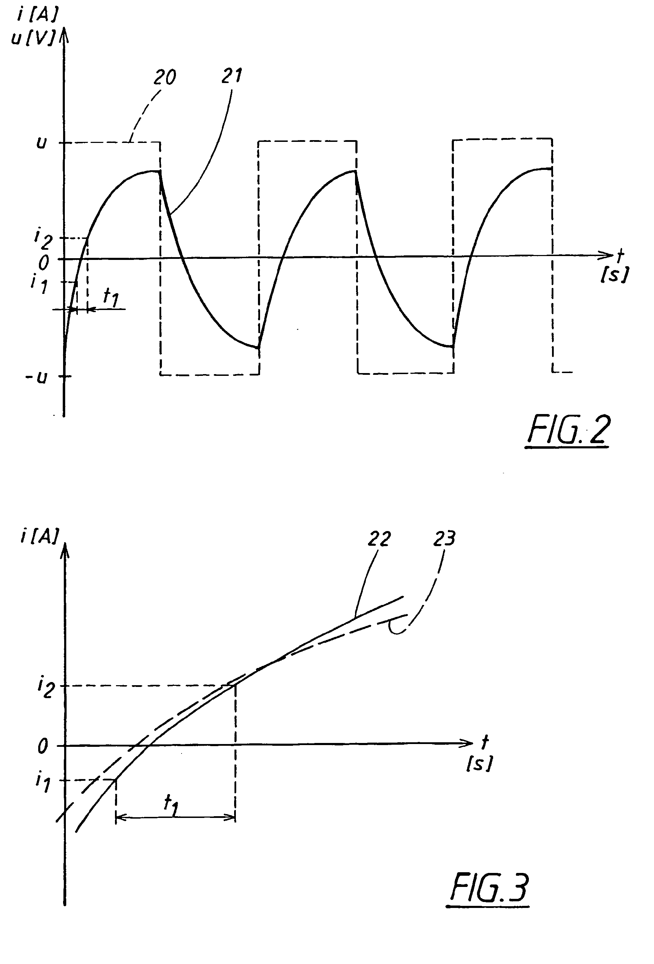

In Fig. 2, the function of the position sensor 1 is illustrated by means of current and voltage diagrams. The above-mentioned square wave voltage delivered by the first operational amplifier is illustrated by a dashed line 20. According to the embodiment, the square wave voltage is selected to be symmetrical about 0 V and to vary between two values, U and -U, respectively. The current i through the coil 5 is illustrated by a continuous line 21. When the square wave voltage changes polarity, the time derivative of the current i will change sign, and the current will change at a certain rate, depending on the inductance. The inductance, in turn, will depend on how far into the coil 5 the core 4 has been inserted. The inductance of the coil 5, and thereby the position of the element 9, can be determined by the computer unit 11 (see Fig. 1) measuring the period of time $t_1$ needed for the current $i$ to change from a first value $i_1$ to a second value $i_2$.

As the core is magnetised by means of a symmetrical alternating voltage (e.g. a square wave voltage) across the coil, a symmetrical magnetising curve / hysteresis curve is obtained (the magnetic field B as a function of $N \times i$, where N is the number of turns of the coil). The inclination of this curve determines the instantaneous inductance of the coil (at each point of the curve). The magnetising curve exhibits the advantageous characteristic of the instantaneous inductance being relatively uninfluenced by the temperature, where the current i is close to zero. Furthermore, the influence from the coil resistance (and thereby its temperature dependence) will be small, as the current through it is small.

In order to obtain accurate measurements, the measuring time $t_1$ should be as long as possible, and, consequently, the two current levels $i_1$, $i_2$, are selected as far apart as possible. The optimum current level values will have to be tried out from case to case, and are usually not located symmetrically about zero.

The magnetic properties of the magnetic core are nonlinear and temperature-dependent. When a magnetising curve is run through, energy is needed, which can be seen partly as a loss resistance connected in series with the coil resistance. Together with the temperature dependence of the coil resistance, the total temperature dependence will become complex, particularly if the core and the coil will receive different temperatures, e.g. during transients.

One particular advantage as regards the position sensor 1 is that a low temperature dependence will be obtained if the current levels $i_1$ and $i_2$ are selected closely enough to zero. This is due to a. o. the fact that the resistance of the coil 5 will not influence the time derivative of the current i at a current i close to zero. More particularly, this is due to the magnetic properties of the core 4, and the so-called series resistances occurring in the coil 5 and the core 4, will have little influence at low currents if, at the same time, the condition of symmetrical magnetisation is fulfilled through symmetrical voltage feeding. Thus, the current levels $i_1$ and $i_2$ are selected to lie within an interval close to zero, exhibiting a low temperature dependence.

Fig. 3 shows in further detail how the current levels, $i_1$, $i_2$, can be selected. The figure is an enlarged portion of the diagram of Fig. 2 and shows two current curves that are both of the type shown in Fig. 2, but where one current curve 22 shows the current in case the position sensor is working at a relatively low temperature (e.g. 25° C) and the other current curve 23 shows the current when the position sensor has a relatively high temperature (e.g. 105° C). As a consequence of the temperature dependence described above it applies that the two curves 22, 23 will appear somewhat different.

During position detection, the computer unit 11 will measure the time $t_1$ needed for the current $i$ to pass from the first current value $i_1$ to the second current value $i_2$. In Fig. 3, that period of time $t_1$ is indicated, which will pass while the current curve 22 (corresponding to a relatively low temperature) runs between the two levels $i_1$, $i_2$.

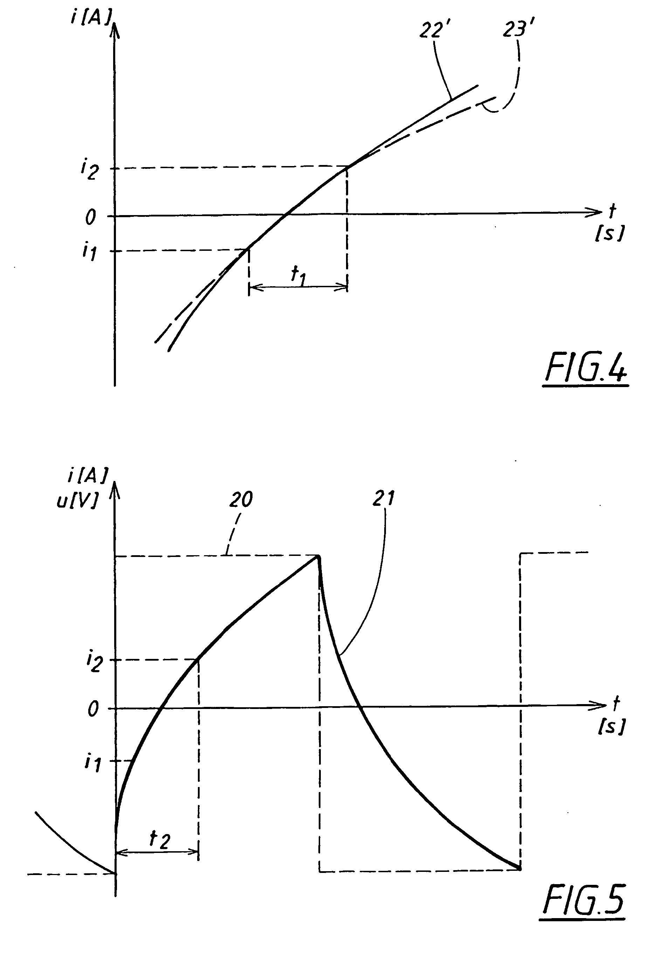

According to an embodiment, described with reference to Fig. 5, the length of a period of time $t_2$ passing from when the square wave voltage switches over and changes polarity until one of the current levels is reached, can be utilised as a measurement of the temperature. If required, a further refined temperature compensation can therefore be performed in addition to what has been described above, more particularly through an additional calculated compensation. Furthermore, this alternative embodiment of the position sensor can be utilised for obtaining a measurement of the temperature in the area surrounding the position sensor.

According to a particularly advantageous embodiment, a measurement regarding the position of the position sensor, i.e. corresponding to the measured period of time $t_1$ needed for the current $i$ to rise from a first level $i_1$ to a second level $i_2$, can be utilised together with a measurement of $t_2$ for obtaining a temperature value regarding the ambient temperature of the gearbox. This is based on the fact that the period of time $t_2$ is a function of the electrical time constant of the sensor, which in turn is dependent on its inductance L and resistance R. Essentially, L is dependent on the position of the sensor, while the resistance R is dependent on the temperature T of the sensor. This means that:

$$t_2 = function_1(L(x), R(T))$$

which means that:

$$t_2 = function_2(t_1, T)$$

which means that:

$$T = function_3(t_1, t_2)$$

Thus, the period of time $t_2$ will vary with the temperature and with the position of the sensor. This means that a value regarding the position x of the sensor (i.e. corresponding to $t_1$) is taken out first, whereupon a measurement of the ambient temperature T can be calculated from $t_2$. In this case, the period of time $t_2$ corresponds to the period of time passing from when the current i through the coil 5 increases from a first predetermined value (e.g. $i_1$) to a second predetermined value (e.g. $i_2$). In this case, the period of time $t_2$ corresponds to the period of time passing from when the above-mentioned square wave voltage switches over and changes polarity until the current level $i_2$ is reached.

If a system with for example four position sensors is utilised in a gearbox, in accordance with what has been mentioned above, a measurement of the ambient temperature of the gearbox can be obtained. More precisely, this can be provided by means of a suitable weighing of the temperature values from the respective sensor, e.g. by calculating an average of the temperature values from the respective sensor or by weighing weighted values from the respective sensor.

The present invention is particularly based on the fact that a diagnosis of a system consisting of more than one position sensor of the above-mentioned type can be accomplished by comparing measurement values regarding the respective position sensor. In a system with for example four position sensors (in accordance with what has been mentioned above), the invention can be implemented by means of the computer unit 11 being adapted for controlling whether a predetermined measurement signal from a given position sensor deviates from a corresponding measurement signal from the other position sensors in the system. In this case, a measured value regarding the temperature of a certain sensor can for example be compared with the values regarding the temperature from the other sensors. If the temperature value from the sensor which is controlled deviates more than a certain permissible limit value from the other sensors, it can be established that an error is evident in the sensor which is controlled. Alternatively, the temperature value from the sensor which is controlled can be compared with a certain weighted value from all the other sensors, e.g. the average of the temperature values from the other sensors. In this case, the computer unit 11 can be adapted for emitting some sort of alarm signal which informs a user of the fact that a position sensor needs to be exchanged or repaired.

Alternatively, the diagnosis can consist of a control of whether the relation between the measured periods of time $t_1$ and $t_2$ of a first position sensor deviates from corresponding relation between these periods of time of the other position sensors in the system. If the difference between the relation between $t_1$ and $t_2$ of the first position sensor deviates more than a certain limit value from corresponding relation of each one of the other position sensors, the computer unit 11 can establish that an error probably is evident in the first position sensor. As an alternative to this method, the computer unit 11 can be adapted to control whether the relation between $t_1$ and $t_2$ of the first position sensor deviates more than a certain maximum value from the average of the corresponding relations between $t_1$ and $t_2$ of the other position sensors. In this case, this too can be said to correspond to a situation where the first position sensor is incorrect. Thus, this alternative diagnosis method can be said to correspond to that the function "function$_3(t_1, t_2)$", according to what has been mentioned above, is replaced by an alternative function "function$_4(t_1, t_2)$". Thus, the diagnosis method according to the invention is not limited to any specific function, by means of which the respective sensor is controlled.

A diagnosis method in accordance with the invention can also be realised by means of the fact that only the period of time $t_1$ (which indicates a measurement of the position of the respective sensor) for a certain sensor is compared with a correspondingly measured period of time for another sensor (or for all the other sensors in a system with several sensors). If the deviation between the period of time $t_1$ of the sensor which is controlled, compared with a corresponding measurement of any other sensor (or for example an average of corresponding measurements from all the other sensors), is larger than a certain expected value, it can be assumed that the sensor which is controlled is defect.

When a certain given position sensor has been controlled in any of the above-mentioned manners, the computer unit 11 will move on and control the other position sensors in proper order. Suitably, this diagnosis method is repeated continuously during operation of the gearbox, so that all the sensors are controlled in accordance with a periodic course of events.

One particular advantage as regards the invention, if it is used in connection with gearboxes, is that existing temperature sensors, which are of frequent occurrence, can be eliminated. This results in cost savings and a simplified manufacture of the gearbox in question.

The principle according to the invention of a diagnosis of a position sensor of the above-mentioned type can be implemented irrespective of whether this sensor is used for detecting position or temperature (or both). The basic principle is based on the fact that any possible deviations from expected values of measured signals regarding $t_1$ and $t_2$ can be utilised during a comparison between a given position sensor and one or several other position sensors in a system.

The function according to the invention can be further refined by means of the fact that the measurement method for the respective position sensor can be used for calculating the mean value of the results from a large number of measurements of the time $t_1$. This is enabled by the square wave voltage having a relatively high frequency, in the order of 250 Hz. For this purpose, the computer unit 11 is operable to determine a mean value of for example 10 or 50 measurements of the current position of the element 9. The advantage of this method is that any influence from occasional deviations of the position of the element 9, for example caused by vibrations or transient movements, can be eliminated.

The invention will not be limited to what has been described above, but various embodiments are conceivable within the scope of the claims. For example, the diagnosis method according to the invention is suitable for use in many different applications, e.g. for diagnosis of detectors for detecting the positions of various components in a vehicle drive line or other industrial products. Furthermore, square wave voltages with various frequencies and "duty cycles" may be used. For example, the invention is not limited to using a supply voltage with a time-symmetrical square wave shape, but other waveforms are also conceivable.

In principle, the diagnosis method according to the invention can utilise a measurement of a period of time passing from when the square wave voltage changes polarity until the current reaches a certain level, wherein the current level can be the above-mentioned first level $i_1$ or the above-mentioned second level $i_2$, or any other suitable current level during the magnetisation course for the core 4 of the coil.

As an alternative to the comparison described above between a first sensor and an number of other sensors, the invention can comprise a comparison between values regarding a sensor and limit values which are determined beforehand, i.e. which do not relate to measurement values from other sensors. Thus, the invention can also be utilised for diagnosis of a separate sensor.

**Claims**

1. A method for diagnosis of a detector (1) intended for detection of the position of a moving element (9), whereby the detector (1) is of the inductive type and comprises a coil (5) and a core (4) movable within the coil, the position of said core in relation to the coil (5) being dependent on the position of said element (9), whereby the method comprises:

> connecting a regularly alternating electrical voltage to said coil (5),
> measuring the current (i) flowing through the coil (5),

**characterised by** comprising:

> measuring a first period of time ($t_1$) needed for said current (i) to change from a first predetermined level ($i_1$) to a second predetermined level ($i_2$);
> measuring a second period of time ($t_2$) passing from when said voltage changes polarity until said current (i) reaches said second predetermined level ($i_2$);
> comparison between values based on said measured periods of time ($t_1$; $t_2$) in relation to a predetermined limit value, and
> determining whether any errors are evident in said sensor (1) through said comparison.

2. The method according to claim 1, comprising detection regarding several sensors (1),
**characterised by** said comparison relating to values regarding measured periods of time of a first sensor (1) and corresponding values of other sensors.

3. The method according to any one of claims 1 or 2, **characterised by** comprising determining a measurement of the position of the core (4) through measuring said first period of time ($t_1$).

4. The method according to any one of claims 2-3, **characterised by** comprising determining a measurement of the temperature of the area surrounding the sensor (1) through measuring said first period of time ($t_1$) and said second period of time ($t_2$).

5. The method according to any one of claims 2-4, **characterised by** said levels ($i_1$, $i_2$) being selected within such an interval that the measurement of said time ($t_1$) will result in minimum temperature dependence.

6. The method according to claim 5,

**characterised by** said levels ($i_1$, $i_2$) being selected close to zero.

7. The method according to any one of the preceding claims,
**characterised by** said alternating electrical voltage being a square wave voltage.

8. The method according to claim 7,
**characterised by** said square wave voltage being selected symmetrically so as to alternate between two voltage levels lying symmetrically about 0 V.

9. The method according to claim 7,
**characterised by** said square wave voltage having a frequency between 2 Hz and 2 kHz.

10. The method according to any one of the preceding claims,
**characterised by** utilising a large number of measurements of said time ($t_1$) for determining a mean value of said time ($t_1$).

11. A device for diagnosis of a detector (1) intended for detection of the position of a moving element (9), whereby the detector (1) is of the inductive type and comprises a coil (5) and a core (4) movable within the coil, the position of said core in relation to the coil (5) being dependent on the position of said element (9), whereby the device comprises:

an amplifier means (12) for connecting a regularly alternating electrical voltage to said coil (5), a measuring device (6) for measuring the current (i) flowing through the coil (5),

**characterised by**
the measuring device (6) comprising means for measuring a first period of time ($t_1$) needed for said current ($i$) to change from a first predetermined level ($i_1$) to a second predetermined level ($i_2$), and a second period of time ($t_2$) passing from when said voltage changes polarity until said current (i) reaches said second predetermined level ($i_2$); and said measuring device (6) comprising means for comparison between values based on said measured periods of time ($t_1$; $t_2$) in relation to a predetermined limit value, and for determining whether any errors are evident in said sensor (1) through said comparison.

**Patentansprüche**

1. Verfahren zur Diagnose eines Detektors (1), der für die Detektion der Position eines Bewegungselements (9) vorgesehen ist, wobei der Detektor (1) vom induktiven Typ ist und eine Spule (5) und einen innerhalb der Spule beweglichen Kern (4) umfasst, welche Position des Kerns in Bezug auf die Spule (5) von der Position des Elements (9) abhängig ist, wobei das Verfahren umfasst:

Anschließen einer regelmäßig wechselnden elektrischen Spannung an die Spule (5),
Messen des durch die Spule (5) fließenden Stroms (i),
**dadurch gekennzeichnet, dass** es umfasst:

Messen eines ersten Zeitraums ($t_1$), der dafür benötigt wird, damit der Strom (i) sich von einem ersten vorbestimmten Pegel ($i_1$) zu einem zweiten vorbestimmten Pegel ($i_2$) wechselt; .
Messen eines zweiten Zeitraums ($t_2$), der vergeht, ab dem der Strom Polarität ändert, bis der Strom (i) den zweiten vorbestimmten Pegel ($i_2$) erreicht;
Vergleichen zwischen Werten basierend auf den gemessenen Zeiträumen ($t_l$ ; $t_2$) in Bezug auf einen vorbestimmten Grenzwert und
Bestimmen, ob im Sensor (1) durch das Vergleichen offensichtliche Fehler vorliegen.

2. Verfahren nach Anspruch 1, umfassend Detektion betreffend mehrere Sensoren (1),
**dadurch gekennzeichnet, dass** sich das Vergleichen auf Werte betreffend gemessene Zeiträume eines ersten Sensors (1) und entsprechende Werte anderer Sensoren bezieht.

3. Verfahren nach einem der Ansprüche 1 oder 2,
**dadurch gekennzeichnet, dass** es die Bestimmung einer Messung der Position des Kerns (4) durch Messen des ersten Zeitraums ($t_1$) umfasst.

4. Verfahren nach einem der Ansprüche 2 - 3,
**dadurch gekennzeichnet, dass** es die Bestimmung einer Messung der Temperatur des den Sensor (1) umgebenden Bereichs durch Messen des ersten Zeitraums ($t_1$) und des zweiten Zeitraums ($t_2$) umfasst.

5. Verfahren nach einem der Ansprüche 2 - 4,
**dadurch gekennzeichnet, dass** die Pegel ($i_1$, $i_2$) innerhalb eines solchen Intervalls ausgewählt werden, dass die Messung der Zeit ($t_1$) zur einer minimalen Temperaturabhängigkeit führen wird.

6. Verfahren nach Anspruch 5,
**dadurch gekennzeichnet, dass** die Pegel ($i_1$, $i_2$) nahe Null ausgewählt werden.

7. Verfahren nach einem der vorhergehenden Ansprüche,
**dadurch gekennzeichnet, dass** die wechselnde elektrische Spannung eine Rechteckspannung ist.

8. Verfahren nach Anspruch 7,
**dadurch gekennzeichnet, dass** die Rechteckspannung symmetrisch ausgewählt wird, so dass zwischen zwei Spannungspegeln gewechselt wird, die symmetrisch ungefähr bei 0 V liegen.

9. Verfahren nach Anspruch 7,
**dadurch gekennzeichnet, dass** die Rechteckspannung eine Frequenz zwischen 2 Hz und 2 kHz aufweist.

10. Verfahren nach einem der vorhergehenden Ansprüche,
**gekennzeichnet durch** Verwendung einer großen Anzahl von Messungen der Zeit $(t_1)$ zur Bestimmung eines Mittelwerts der Zeit $(t_1)$.

11. Einrichtung zur Diagnose eines Detektors (1), der für die Detektion der Position eines Bewegungselements (9) vorgesehen ist, wobei der Detektor (1) vom induktiven Typ ist und eine Spule (5) und einen innerhalb der Spule beweglichen Kern (4) umfasst, welche Position des Kerns in Bezug auf die Spule (5) von der Position des Elements (9) abhängig ist, wobei die Einrichtung umfasst:

ein Verstärkermittel (12) zum Anschließen einer regelmäßig wechselnden elektrischen Spannung an die Spule (5),
ein Messgerät (6) zum Messen des durch die Spule (5) fließenden Stroms (i) **gekennzeichnet durch**
das Messgerät (6) umfassend Mittel zum Messen eines ersten Zeitraums $(t_1)$, der dafür benötigt wird, damit der Strom (i) sich von einem ersten vorbestimmten Pegel $(i_1)$ zu einem zweiten vorbestimmten Pegel $(i_2)$ wechselt, und eines zweiten Zeitraums $(t_2)$, der vergeht, ab dem die Spannung Polarität ändert, bis der Strom (i) den zweiten vorbestimmten Pegel $(i_2)$ erreicht;
und das Messgerät (6) umfassend Mittel zum Vergleichen zwischen Werten basierend auf den gemessenen Zeiträumen $(t_i ; t_2)$ in Bezug auf einen vorbestimmten Grenzwert und zum Bestimmen, ob im Sensor (1) **durch** das Vergleichen offensichtliche Fehler vorliegen.

**Revendications**

1. Procédé de diagnostic d'un détecteur (1) destiné à la détection de la position d'un élément en mouvement (9), par lequel le détecteur (1) est de type inductif et comprend une bobine (5) et un noyau (4) déplaçable à l'intérieur de la bobine, la position dudit noyau en relation à la bobine (5) étant dépendante de la position dudit élément (9), le procédé comprenant ainsi :

la connexion d'une tension électrique régulièrement alternative à ladite bobine (5),
la mesure du courant (i) passant à travers de la bobine (5), **caractérisé en ce qu'**il comprend :

la mesure d'une première période de temps $(t_1)$ nécessaire pour que ledit courant (i) passe d'un premier niveau prédéterminé $(i_1)$ à un deuxième niveau prédéterminé $(i_2)$ ;
la mesure d'une deuxième période de temps $(t_2)$ passant de lorsque la tension change de polarité jusqu'à ce que ledit courant (i) atteigne ledit deuxième niveau prédéterminé $(i_2)$ ;
la comparaison entre des valeurs basées sur les périodes de temps mesurées $(t_1 ; t_2)$ en relation à une valeur limite prédéterminée, et
la détermination de la présence ou non d'erreurs éventuelles évidentes dans ledit capteur (1) par le biais de ladite comparaison.

2. Procédé selon la revendication 1, comprenant une détection concernant plusieurs capteurs (1),
**caractérisé en ce que** ladite comparaison se rapporte aux valeurs concernant les périodes de temps mesurées d'un premier capteur (1) et des valeurs correspondantes d'autres capteurs.

3. Procédé selon l'une quelconque des revendications 1 ou 2,
**caractérisé en ce qu'**il comprend la détermination d'une mesure de la position du noyau (4) par le biais de la mesure de ladite première période de temps $(t_1)$.

4. Procédé selon l'une quelconque des revendications 2 à 3,
**caractérisé en ce qu'**il comprend la détermination d'une mesure de la température de la zone entourant le capteur (1) par le biais de la mesure de ladite première période de temps $(t_1)$ et de ladite deuxième période de temps $(t_2)$.

5. Procédé selon l'une quelconque des revendications 2 à 4,
**caractérisé en ce que** lesdits niveaux $(i_1, i_2)$ sont choisis au sein d'un tel intervalle de sorte que la mesure dudit temps $(t_1)$ entraînera une dépendance minimale à la température.

6. Procédé selon la revendication 5,

**caractérisé en ce que** lesdits niveaux ($i_1$, $i_2$) sont choisis proches de zéro.

7.  Procédé selon l'une quelconque des revendications précédentes,
    **caractérisé en ce que** ladite tension électrique alternative est une tension à onde rectangulaire.

8.  Procédé selon la revendication 7,
    **caractérisé en ce que** ladite tension à onde rectangulaire est sélectionnée symétriquement afin qu'elle alterne entre deux niveaux de tension se situant symétriquement autour de 0 V.

9.  Procédé selon la revendication 7,
    **caractérisé en ce que** ladite tension à onde rectangulaire a une fréquence se situant entre 2 Hz et 2 kHz.

10. Procédé selon l'une quelconque des revendications précédentes,
    **caractérisé par** l'utilisation d'un grand nombre de mesures dudit temps ($t_1$) d'une valeur moyenne dudit temps ($t_1$).

11. Dispositif de diagnostic d'un détecteur (1) destiné à la détection de la position d'un élément en mouvement (9), par lequel le détecteur (1) est de type inductif et comprend une bobine (5) et un noyau (4) déplaçable à l'intérieur de la bobine, la position dudit noyau en relation à la bobine (5) étant dépendante de la position dudit élément (9), le dispositif comprenant ainsi :

    un moyen d'amplification (12) pour la connexion d'une tension électrique régulièrement alternative à ladite bobine (5),
    un dispositif de mesure (6) pour mesurer le courant (i) passant à travers la bobine (5),

    **caractérisé en ce que**

    le dispositif de mesure (6) comprend un moyen permettant de mesurer une première période de temps ($t_1$) nécessaire pour que ledit courant (i) passe d'un premier niveau prédéterminé ($i_1$) à un deuxième niveau prédéterminé ($i_2$), et une deuxième période de temps ($t_2$) passant de lorsque la tension change de polarité jusqu'à ce que ledit courant (i) atteigne ledit deuxième niveau prédéterminé ($i_2$) ;
    et ledit dispositif de mesure (6) comprenant un moyen permettant la comparaison entre les valeurs basées sur lesdites périodes de temps mesurées ($t_1$ ; $t_2$) en relation à une valeur limite prédéterminée, et pour déterminer la présence ou non d'erreurs éventuelles évidentes dans ledit capteur (1) par le biais de ladite comparaison.

FIG.1

_FIG.2_

_FIG.3_

_FIG.4_

_FIG.5_

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- SE 99018764
- SE 0000983 W